# EUROPEAN PATENT APPLICATION

(11) **EP 1 995 681 A1**
(43) Date of publication of application: **26.11.2008**
(21) Application number: 08007543.5
(22) Date of filing: 17.04.2008
(51) Int. Cl.: G06F 21/00

(54) **Authenticity assurance system for spreadsheet data**

(30) Priority: 23.05.2007 JP 2007136126
(71) Applicant: Hitachi, Ltd., Chiyoda-ku Tokyo 100-8280 (JP)
(72) Inventor: Miyazaki, Kunihiko, Chiyoda-ku Tokyo 100-8220 (JP); Hatano, Yasuo, Chiyoda-ku Tokyo 100-8220 (JP)
(74) Representative: Strehl Schübel-Hopf & Partner

(57) **Abstract**

A method is provided for applying a redactable signature method capable of verification even after deletion (blacking-out) of a part of a signed electronic document to spreadsheet data.

By giving an ID for a redactable signature to a cell to be processed in the processed data by a spreadsheet program, which part in the file corresponds to the cell to be processed can be easily determined when the data is outputted as a file.

## Description

### INCORPORATION BY REFERENCE

This application claims priority based on a Japanese patent application, No. 2007-136126 filed on May 23, 2007, the entire contents of which are incorporated herein by reference.

### BACKGROUND OF THE INVENTION

The present invention relates to a method for assuring the authenticity of electronically generated data and a system therefor.

Electronic data widely used in estimates, invoices, reports, plans, and applications at present includes spreadsheets which associate data to a region called a cell for display in a lattice state so as to enable data processing in the cell unit. As application software handling them, spreadsheet software is available ("Calc", OpenOffice.org., for example, URL:http://www.openoffice.org/product/calc.html (referred to as Document 1)).

As authenticity assurance methods for electronically generated data, electronic signatures (also referred to as digital signatures) are available ("Applied Cryptography: Protocols, Algorithms, and Source Code in C, Second Edition" by Bruce Schneier, John Wiley & Sons, (October 18, 1995), pp. 483 to 502, for example (referred to as Document 2)). The above spreadsheet software includes software having functions to give electronic signatures. For example, the OpenOffice.org "Calc" shown in Document 1 has a function for an electronic signature (OpenOffice.org, "XML Project", URL:http://xml.openoffice.org/, (referred to as Document 3).

Technology is available that can delete a portion allowed by a signer from a document owned by an owner and to which a signature is given in advance by the signer different from the owner and can verify the validity of the signed document after deletion ("Content Extraction Signatures" by Ron Steinfeld, Laurence Bull, Yuliang Zheng, in International Conference on Information Security and Cryptology ICISC 2001, volume 2288, LNCS, pp. 285-304, Berlin, 2001. Springer-Verlag, (2001), for example (referred to as Document 4)) and technology for authenticity assurance of electronic documents capable of both assurance of authenticity of disclosed documents and deletion of information inappropriate for disclosure (U.S. Patent Application Publication No. 2005/0015600, for example, (referred to as Document 5)) is available.

### SUMMARY OF THE INVENTION

When an electronic document generated by the spreadsheet software disclosed in Document 1 is used as an application or report, it is important to ensure its authenticity (who made or approved it or whether any illegal alteration has been made since then). On the other hand, in some cases there is a demand for documents to be used with some of the cells concealed (in a state where the information is deleted and colored in black, for example. Hereinafter, referred to as "redacted").

However, it is difficult to conceal a cell in spreadsheet data to which a signature to assure authenticity has been given using the electronic signature function disclosed in Document 3. That is because, since concealing of some cells in the spreadsheet data to which a signature is given is an alteration of the spreadsheet data, the change invalidates the signature. In order to avoid invalidation of the signature, data is sometimes set in advance so that it cannot be changed. In any case, it is difficult to conceal some cells while their authenticity is kept confirmable.

Documents 4 and 5 disclose a electronic signature methods in which a part of an electronic document can be redacted after giving a signature while the signature can be kept verifiable (hereinafter referred to as the redactable signature method). With these redactable signature methods disclosed, the signature is given to a set of data or a data string as a minimum unit that can be redacted.

However, with the methods disclosed in the above documents, if configuration of electronic documents to be applied becomes complicated, its processing efficiency might be lowered.

Moreover, a specific application method is not disclosed in the above documents when an electronic document to be applied is spreadsheet data.

The present invention provides a specific application method for a redactable signature that can restrict a drop in processing efficiency even if configuration of the electronic document to which the redactable signature method is applied is complicated.

That is, a data conversion method for applying the redactable signature method to an electronic document and a method of verifying the redacted data are provided.

Moreover, the present invention provides a data conversion method for applying the redactable signature method to spreadsheet data, a method for specifying the cell to be redacted, a method for displaying the redacted data, a method for verifying the redacted data, a display method for the verification results, and a device.

Specifically, in the present invention, a data conversion method is provided so that a specific ID for a redactable signature (also simply called the ID) in the spreadsheet data is given to each cell contained in the spreadsheet data, the spreadsheet data is outputted as a file, and the file data is converted to a set or a sequence of one or a plurality of data specified by the ID in the file data.

The ID may be given to all the cells or may be given to only the cell determined to be redacted or a cell with a possibility of being redacted. Presence or absence of the ID for the redactable signature does not affect spreadsheet functions, and when it is output as a file, data relating to the ID is contained in the file.

The above ID may only be specific within the electronic document (including the spreadsheet data) to be managed as a single file in a system to which the present invention is applied and may be duplicated between electronic documents that can be identified as different files.

Moreover, the present invention provides a cell specifying method for specifying a region that may be redacted in the future or a region to be redacted with a cell as a minimum unit capable of being redacted using a mouse pointer or a keyboard operation.

Moreover, the present invention provides a method for generating spreadsheet data in which data in a cell to be redacted is deleted or replaced by a character string indicating a black-out or a meaningless character string. Also, a method is provided for displaying the redacted cell in a state easily distinguishable from the other non redacted cells by replacing the background color by a color (black, for example) that can be easily recognized as being redacted.

Moreover, the present invention provides a method for verifying the redacted data by obtaining a set or sequence of data specified by the ID specific to each cell from the spreadsheet data containing the redacted cell, executing signature verification processing on the data set or data sequence and outputting the result. The data sets refer to those not sequenced among the elements, while the data sequences refer to those sequenced.

Moreover, the present invention provides a display method for verification results in which the signature verification result is displayed using a dialog box on the screen or a cell confirmed as not having been altered as the result of verification is displayed with its background color changed or surrounded by a bold line so as to be easily distinguished from the other regions.

In the authenticity assurance system for spreadsheet data provided by the present invention, more specifically, a signed spreadsheet data creator device is provided; the spreadsheet data has one or more cell element data corresponding to a cell as its component; the signed spreadsheet data creator device is provided with a spreadsheet data unit for managing the spreadsheet data by the cell element data unit; a unit is provided for generating a random number to each of the cell element data corresponding to one or a plurality of cells to be targets of authenticity assurance in the cell constituting the spreadsheet data; a unit is provided for combining the cell element data with the corresponding random number generated as above and a hash value is calculated for the combined data; and a redactable signature generating unit is provided for calculating a signature value for one or more combinations of the hash values, and a spreadsheet unit is provided with a unit for generating signed spreadsheet data by giving a redactable signature ID to the cell element data corresponding to the cell to be the target of the authenticity assurance.

Moreover, the authenticity assurance system for spreadsheet data may be configured such that the spreadsheet unit is provided with a unit for specifying the cell that receives an instruction from a user through an input device as the target of authenticity assurance in the signed spreadsheet data creator device.

Moreover, the authenticity assurance system for spreadsheet data may be configured such that the spreadsheet unit is provided with a unit for changing the background color of the cell to be the target of the authenticity assurance that receives an instruction from the user in the signed spreadsheet data creator device.

Moreover, the authenticity assurance system for spreadsheet data may be configured such that the spreadsheet unit is provided with a unit for adding the generated signature value and the random number to the signed spreadsheet data in the signed spreadsheet data creator device.

Moreover, the authenticity assurance system for spreadsheet data may be further provided with a disclosure spreadsheet data creator device having a spreadsheet unit for managing the signed spreadsheet data by the cell element data unit and a redaction processing unit for deleting the random number corresponding to the cell element data to be the target of redaction processing from the signed spreadsheet data, and moreover, in the disclosure spreadsheet data creator device, the spreadsheet unit is provided with a unit for receiving specification of a cell to be the target of redaction processing, identifying the redactable signature ID given to the specified cell and transmitting it to the redaction processing unit; and a unit is provided for deleting the cell element data to be the target of redaction processing or generating a disclosure document in which the data is replaced by a character, symbol, figure or multimedia data recognizable as having been deleted, and the redaction processing unit may specify the cell element data to be the target of redaction processing on the basis of the redactable signature ID.

Moreover, the authenticity assurance system for spreadsheet data may be configured such that in the disclosure spreadsheet data creator device, the spreadsheet unit may be provided with a unit for setting a cell specified by a user as a target for redaction processing through the input device provided at the disclosure spreadsheet data creator device.

According to the above mode, when the spreadsheet data is disclosed, authenticity of the spreadsheet data can be disclosed in a verifiable state even if a portion whose disclosure is not necessary or not appropriate is kept secret. That is, authenticity such that other cells are not altered can be assured for the spreadsheet data while some cells are kept secret.

The above mode may be also applied to electronic documents other than spreadsheet data such as figure data and character string data.

According to the present invention, even if configuration of an electronic document to which a redactable signature method is applied is complicated, any drop in processing efficiency can be restricted.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 is a diagram illustrating an outline configuration of a network system that embodies an embodiment;
Fig. 2 is a diagram illustrating an outline configuration of an original document creator device 102 in this embodiment;
Fig. 3 is a flowchart illustrating an outline giving a redactable signature to an electronic document in this embodiment;
Fig. 4 is a diagram illustrating an outline configuration of an electronic document 231 input in a managing device 102 and a signature file 232 output by the managing device 102 in this embodiment;
Fig. 5 is a flowchart illustrating a processing outline in the signature generation PG 222 in this embodiment;
Fig. 6 is a flowchart illustrating a processing outline in the disclosed document production PG 230 in this embodiment;
Fig. 7 is a flowchart illustrating a processing outline in the disclosed document verification PG 233 in this embodiment; and
Fig. 8 is an outline explanatory diagram of a screen image example in the disclosed document production processing (at redaction processing) in this embodiment.

### DETAILED DESCRIPTION OF THE EMBODIMENTS

The present invention will be described below referring to embodiments applied to an information disclosure system in an administrative agency, but the present invention may be also applied to information disclosure systems outside those of administrative agencies and to systems in general handling spreadsheet data outside of the information disclosure system. Also, the present invention may be applied to electronic documents other than spreadsheet data.

The spreadsheet data in this embodiment refers to data capable of displaying a region called a cell arranged in a lattice state on a display screen, in which data associated to each cell is configured so as to be capable of processing by the cell unit.

The spreadsheet software arranges the cells in a lattice state on the display screen, displays the data associated with the cells within the cell and carries out data processing by the cell unit.

The data stored in each cell of the spreadsheet data may contain any one or more of texts, numeral values, calculation formulas, conditional expressions, program codes, figures, graphs, link information to other cells, link information to other electronic data, sounds and images (still images, movies, etc.). Moreover, data electronically describing any one or more of the operations, conditions, relations, date of production, creators, changers, readers, those who are allowed to read, producing devices, changing devices, viewing devices and storage devices incidental to the data or data configured by combining them may be included. Moreover, a cell with a larger size in which a plurality of cells are coupled may be included.

The spreadsheet data is usually used as data for expressing a table, but is not limited to this and may express a sentence, for example. Also, the spreadsheet data may be used as an estimate, invoice, report, plan, application, proposal, manual, log data, statistic data, ledger sheet, or drawing. The electronic documents below refer to spreadsheet data unless otherwise specified.

An outline of the redactable signature method used in this embodiment (hereinafter referred to as SUMI-4 in some cases) is as follows. Targets of application of the present invention are not limited to the SUMI-4. For example, application can be also made to a method which can set disclosure conditions (hereinafter referred to as SUMI-5 in some cases) disclosed in Document 5 (the disclosure of which is incorporated herein by reference for all purposes).

Outline of the redactable signature method: Signature generation processing
1. An electronic document to be given a signature (spreadsheet data in this embodiment) is divided into a unit capable of being redacted (called blocks). Hereinafter, the electronic document before division will be regarded as the same as a set including a plurality of blocks capable of being redacted.
2. A random number is generated for each block capable of being redacted.
3. A hash value for data in which the data of a block capable of being redacted and the random number generated in 2 above are joined is calculated for each block capable of being redacted.
4. A digital signature is generated for the data calculated in 3 above in which the hash values in the same number as those of the blocks capable of being redacted calculated in 2 above are joined.
5. The spreadsheet data containing the random number generated in 2 above, the electronic signature generated in 4 above, and the electronic document to be given a signature is made as an electronic document with a redactable signature.
6. A hash value is further calculated for the data joined with the hash value in 4 above, and an electronic signature may be generated for the calculated hash value.

Outline of the redactable signature method: Redaction processing
1. From blocks capable of being redacted contained in the electronic document with a redactable signature, a block to be actually redacted is selected.
2. For all the blocks selected in 1 above, a hash value is calculated for data combining data of the block capable of being redacted and a random number corresponding thereto.
3. From the electronic document with a redactable signature, the block capable of being redacted and its corresponding random number are deleted and replaced by the hash value calculated in 2 above for all the blocks selected in 1 above. This is made as a redacted electronic document with a redactable signature.

Outline of the redactable signature method: Signature verification processing
1. In redacted electronic documents with redactable signatures, a hash value for the data in which the data of the block capable of being redacted and the random number corresponding to it are joined is calculated for all the non-redacted blocks.
2. Data combining the hash value calculated in 1 above and the hash value for the black-out block given as the redacted electronic document with the redactable signature is calculated.
3. For the data calculated in 2 above, the electronic signature contained in the redacted electronic document with the redactable signature is verified.

The hash value in the above outline of the redactable signature method is an output value of a function called a hash function. The hash function in this embodiment is a function having data of an arbitrary length as input and data of a fixed length as output and is a function having a nature such that estimating the originally input data from the output value (hash value) is extremely difficult and searching for two different input data giving the same output value (hash value) is also extremely difficult. As such hash functions, SHA-1, SHA-224, SHA-256, SHA-384, SHA-512 are well known, but the hash function available in this embodiment is not limited to these hash functions.

The electronic signature in the above outline of the redactable signature method is data for assuring that the electronic data has been produced or confirmed by a signer and has not been altered since thereafter. In general, it refers to an output value obtained by calculating its hash value, with data of an arbitrary length as input, and executing calculations using a secret key owned by an authorized person kept in secret for data given padding processing to make the hash value accord with data of a predetermined length. This output value can be checked to see whether it matches the input data only if data called the public key corresponding to the secret key is provided. This checking processing is generally called signature verification processing. If it is known in advance that the input data length is short, the processing to calculate a hash value may be omitted. An RSA signature, DSA signature and ECDSA signature are well known as electronic signature methods, but the electronic signature method available in this embodiment is not limited to these electronic signature methods. In the following, cases using the RSA signature will be described unless otherwise specified. Generation of the electronic signature in steps 4 and 5 in the outline of the signature generation processing in the above redactable signature method may be carried out according to a known electronic signature method. Similarly, the verification of the electronic signature in step 3 in the signature verification processing may be executed according to a known verification method for electronic signatures.

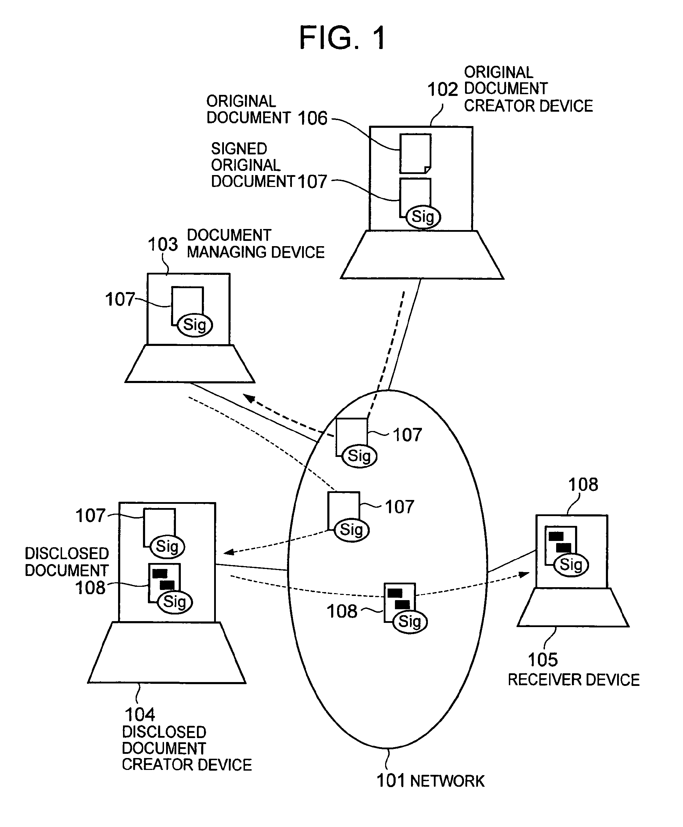

Fig. 1 is an outline block diagram of the system in the first embodiment. In this embodiment, an information disclosure system of an administrative agency is explained as an example, but the present invention can be also applied to information disclosure systems in organizations and for individuals other than the administrative agency and for document management systems and systems handling other spreadsheet data.

For example, the present invention can be applied to a system in which an account statement showing the account history of a credit card as spreadsheet data is electronically issued. The account statement of the credit card is used when an employee applies for expenses from his company, for example. At this time, it is desirable for protection of personal information from the standpoint of the employee that the portions other than necessary for application (breakdown of articles purchased for personal purposes, for example) be redacted and deleted in the account statement issued by the credit card company before application to the employer company. According to this embodiment, even if a non-disclosed portion is deleted, it becomes possible to verify that the amount of the disclosed portion in the statement is indeed that described by the credit card company, which is preferable.

As shown in the figure, in this system, the original document creator device 102, the document managing device 103 and the disclosed document creator device 104 used by employees of an administrative agency and a receiver device 105 used by the public are all coupled through the network 101.

In this embodiment, the case where each device is coupled to the same network 101 is described, but the connection form may be different from this. For example, the original document creator device 102, the document managing device 103 and the disclosed document creator device 104 are all coupled to the LAN (Local Area Network) of the administrative agency, and the LAN may be coupled through a gateway server to the network 101 to which the receiver device 105 used by the public is coupled. When such a connection form is employed, the LAN of the administrative agency is protected by the gateway server from an attack such as illegal access from the external network 101, which is preferable from the viewpoint of information security.

The original document creator device 102 is used such that the original document creator, who is an employee of the administrative agency, produces an administrative document (a document prepared officially) as electronic data, gives an electronic signature to the produced administrative document and then requests a signed administrative document from the document managing device 103.

In this embodiment, the administrative document to be given a signature by the original document creator is called the original document 106.

In this embodiment, an example is shown in which the production of an original document and giving of a signature to the original document 106 are both executed at the original document creator device 102, but the production of a document that differs from this may be carried out by an apparatus different from the original document creator device 102 and sent to the original document creator device 102 using the network 101 or an available recording medium, and a signature may be given to the original document 106 at the original document creator device 102.

The document managing device 103 receives a request from the original document creator device 102 and stores the signed original document 107 produced by the original document creator device 102. Also, the device receives a request from the disclosed document creator device 104 and transmits the signed original document 107 to be disclosed which has been stored in advance to the disclosed document creator device 104. Upon receipt of a storage request from the original document creator device 102 and upon receipt of a transmission request of the document to be disclosed from the disclosed document creator device 104, access control by executing appropriate user authentication processing is preferable from the viewpoint of information security.

The disclosed document creator device 104 receives an information disclosure request from a general user who is a user of the receiver device 105, searches the document to be disclosed according to the information disclosure request and requests transmission of the signed original document 107, which is the document to be disclosed, to the document managing device 103.

The disclosed document creator device 104 produces a disclosed document 108 having information inappropriate for disclosure removed from the viewpoint of personal information protection or protection of information relating to national security from the information contained in the signed original document 107 received from the document managing device 103 and discloses the produced disclosed document to the receiver device 105.

A disclosing method may be arbitrarily designed such as transmission to a requester or the receiver device 105 in an electronic mail or upload to a Web server operated by an administrative agency or other organ. In the case of upload to the Web server, there is an advantage in that a general user other than the user of the receiver device 105 having made the information disclosure request can inspect the disclosed information.

In this embodiment, a case is illustrated where receipt of the information disclosure request from a general user, search for the document to be disclosed, request to the document managing device 103 for the document to be disclosed, production of the disclosed document 108, and disclosure of the disclosed document 108 are carried out in the same disclosed document creator device 105, but this may be configured differently. For example, the receipt of the information disclosure request, search for the document to be disclosed, and request to the document managing device 103 for the document to be disclosed may be carried out in a device different from the disclosed document creator device 105 and the production of the disclosed document 108 and the disclosure of the disclosed document 108 may be conducted at the disclosed document creator device 105.

The receiver device 105 is used by ordinary residents, as users, to make an information disclosure request to an administrative agency and to verify the authenticity of the disclosed document 108 made public as the result. The receiver device 105 transmits information required to identify the document to be disclosed to the disclosed document creator device 104 and requests information disclosure. Also, it verifies if the contents of the disclosed document 108 are identical with the contents of the original document 106 except the portion not disclosed because it is inappropriate for disclosure.

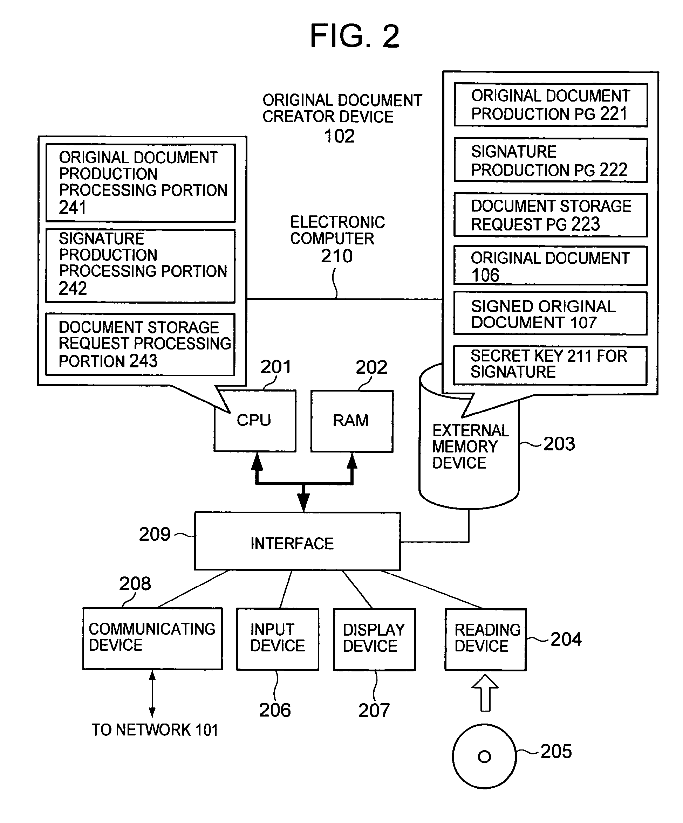

Fig. 2 is a diagram illustrating the outline configuration of the original document creator device 102 in this embodiment.

The original document creator device 102 can be realized by an electronic computer 210 having a general configuration, provided with a CPU 201, a RAM 202 functioning as a work area of the CPU 201, an external memory device 203 such as a hard disk device, a reading device 204 for reading data from a recording medium 205 such as CD-ROM and FD with portability, an input device 206 such as a keyboard and mouse, a display device 207 such as a display, a communicating device 208 for communication with another device through a network, and an interface 209 governing data transmission/receiving between each of the above-mentioned components.

The external memory device 203 of the original document creator device 102 stores an original document production program (hereinafter, the program is referred to as PG) 221, a signature generation PG 222, and a document storage request PG 223. They are loaded into the RAM 202, executed by the CPU 201, and embodied as processes of an original document production processing portion 241, a signature production processing portion 242, and a document storage request processing portion 243, respectively. In addition, the external memory device 203 stores data input /output to/from each of the processing portions (original document 106, signed original document 107, secret key 211 for signature). The secret key 211 for signature requires particularly strict control from the viewpoint of security. Thus, it may be stored in a tamper-proof device different from the external memory device 203 storing other data.

The other document managing device 103, disclosed document creator device 104, and the receiver device 105 are also provided with a configuration similar to that of the original document creator device 102. The external memory device of the document managing device 103 stores the document storage PG 224 and the document-to-be-disclosed transmission PG 225 as well as the signed original document whose storage is requested. The external memory device 203 of the disclosed document creator device 104 stores the information disclosure request receiving the PG 226, document-to-be-disclosed search PG 227, document-to-be-disclosed request PG 228, disclosed point determining PG 229, disclosed document production PG 230, and disclosed document disclosure PG 231. The external memory device 203 of the receiver device 105 stores the information disclosure request PG 232 and the disclosed document verification PG 233.

These programs are loaded into the RAM 202 of the respective devices and executed by the CPU 201 so that the process providing the functions described below is embodied.

In the description of this embodiment, each program is supposed to be stored in the external memory device 203 in advance, but it may be introduced into the external memory device 203 or RAM 202 via the external interface from a recording medium such as an FD and CDROM through the reading device 204 or from a communication medium (a network such as the Internet or digital signals and carrier waves carrying the network) through the communicating device 208 when necessary. In this disclosure, the program may be called a code or module.

In the following description, for convenience the program is explained as an executing entity.

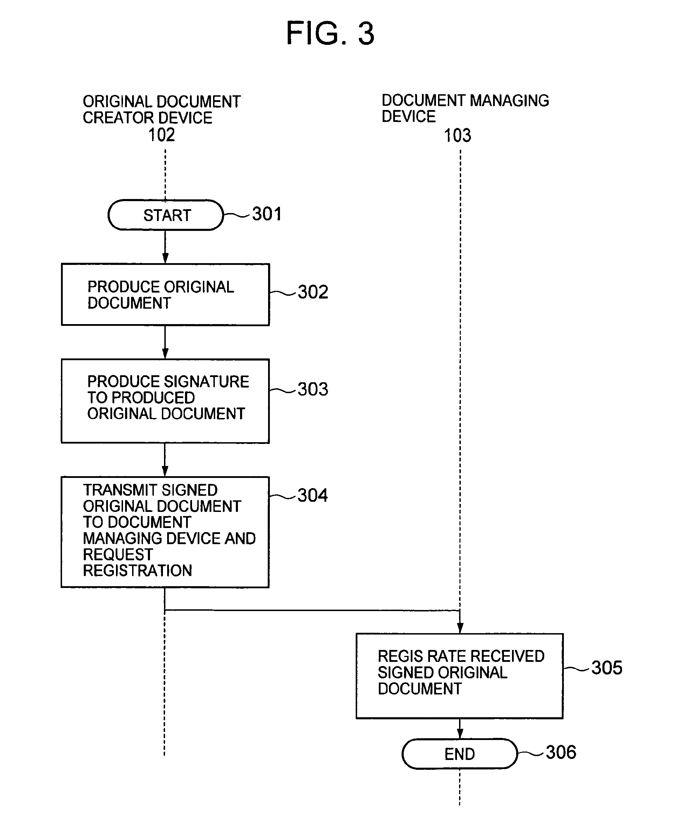

Fig. 3 is a flowchart illustrating an outline to produce an administrative document, which is the original document, and to store it in the document managing device 103 in this embodiment. In the state where the original document is produced and stored, it is not necessarily possible to predict which part of the document stored in the document managing device is information available for disclosure and which part is not, upon receipt of an information disclosure request in the future. In general, in many cases it is not possible to make any prediction.
Original document production/storage flow:
(Processing of the original document creator device 102)
301: Start
302: Production of original document (by original document production PG 221
303: Generation of signature for the produced original document (by signature production PG 222)
304: Transmission and request of registration of signed original document to the document managing device 103 (by document storage request PG 223)
(Processing of the document managing device 103)
305: Registration of received signed original document in the document managing device 103 (by document storage PG 224)
306: End

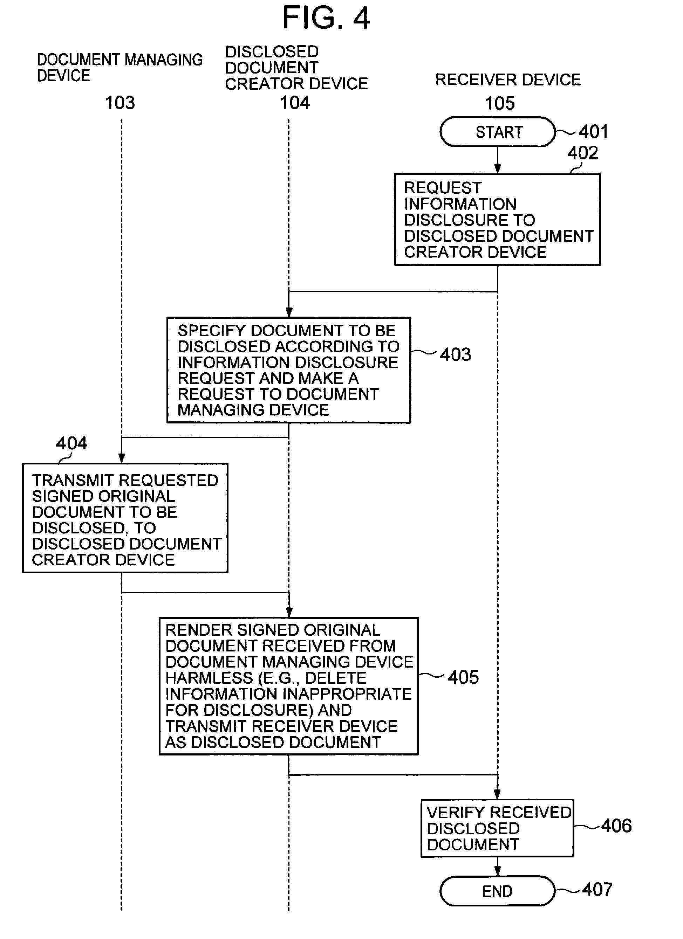

Fig. 4 is a flowchart illustrating an outline of information disclosure upon receipt of an information disclosure request from a general user.
Information disclosure flow:
(Processing of the receiver device 105)
401: Start
402: Transmission of information that can specify a range of information whose disclosure is desired to the disclosed document creator device 104 (by information disclosure request PG 232) in order to request information disclosure
(Processing of the disclosed document creator device 104)
403: Receiving of information specifying the range of information whose disclosure is desired (by information disclosure request receiving PG 226);
   search of the document to be disclosed based on the information specifying the range (by document-to-be-disclosed search PG 227) from a document group managed by the document managing device 103 using a known search technology; and
   request of the document from the document managing device 103 (by document-to-be-disclosed request PG 228)
(Processing of the document managing device 103)
404: Transmission of requested signed original document to be disclosed to the disclosed document producing device 104 (by document-to-be-disclosed transmission PG 225)
(Processing of the disclosed document creator device 104)
405: Checking of contents of the received signed original document with an information disclosure policy stipulated in advance so as to determine a point appropriate for disclosure (by disclosed point determining PG 229), production of a disclosed document concealing a point inappropriate for disclosure (by disclosed document production PG 230), and transmission of the disclosed document to the receiver device 105 (by disclosed document disclosure PG 231)
(Processing of the receiver device 105)
406: Verification of authenticity of the received disclosed document (by disclosed document verification PG 233)
407: End

In the information disclosure system whose outline is shown as above, the most important point is availability of both the guarantee of authenticity of the disclosed document and the deletion of information inappropriate for disclosure.

In an operating mode where the disclosed document is always identical with the original document, a receiver can check the authenticity of the disclosed document (with the same data as the original document in this case) by applying known electronic signature verification technology only if the creator of the original document gives a signature to the original document in advance by applying known electronic signature technology.

However, in the information disclosure system as described in this embodiment, the original document is not necessarily identical with the disclosed document. That is because, since there is a possibility that information inappropriate for disclosure (information relating to personal privacy or information which should not be disclosed for national security, for example) might be contained in the original document at the time of information disclosure, such information needs to be deleted (i.e., redacted) from the disclosed document. From the viewpoint of information disclosure as in such blacking-out cases, even for a change in the original document which is regarded as appropriate or indispensable, with known electronic signature technology only the result that "verification is not possible" is obtained, similar to cases of alteration by a malicious third party. Thus, in this embodiment, the redactable signature technology, which can realize both the guarantee of authenticity of a disclosed document and the deletion of information inappropriate for disclosure, is utilized.

In application of the redactable signature technology to spreadsheet data, the spreadsheet data needs to be converted to data capable of redactable signature processing.

In this embodiment, by assigning a specific ID to each cell, it is possible to specify which part of the data recognized by a user (as a region to be redacted, for example), or as a specific example, which specific region on the screen display corresponds to the portion present as a computer file.

The above processing will be specifically described below showing the processing flow of the signature production PG 222, disclosed document production PG 230, and disclosed document verification PG 233.

The signature producing PG 222 comprises the spreadsheet PG 250 and the redactable signature generation PG 251. The spreadsheet PG 250 manages information of the spreadsheet data in an internal data format appropriate as data stored in the RAM 202, for example, and serves as the part receiving instructions from a user through the input device 206 such as display on the display device 207, writing in the external memory device 203 as a file (in XML format or its compression, for example) or reading from the file.

The redactable signature generation PG 251 operates in coordination with the spreadsheet PG 250 and generates a redactable signature in a file output by the spreadsheet PG 250.

The disclosed document production PG 230 and the disclosed document verification PG 233 also comprise the spreadsheet PG 250 and redaction processing PG 252, spreadsheet PG 250 and redactable signature verification PG 253, respectively.

In order to apply the redactable signature technology to the spreadsheet data, it is necessary to distinguish which part of the file output by the spreadsheet PG 250 is data to be processed by the redactable signature.

More specifically, suppose that cells displayed in a lattice state are displayed on the display device 207, and one of those cells is specified by a user using the input device 206, for example. At this time, it is necessary to identify to which part in the file output by the spreadsheet PG 250 the data corresponding to the contents of the specified cell applies. That is because, even if the cell can be expressed as the one specified by an address such as column A and row 1 on the screen, for example, information such as "A" or "1" is not necessarily included in the file.

Moreover, in the case of a complicated spreadsheet in which several cells are coupled, it becomes more difficult to identify the portion corresponding to the cell.

Actually, in the case of a file handled by the Calc program disclosed in Document 1 (a file format using an XML file called OpenDocument format, in which several files such as XML files representing spreadsheet data and XML files describing meta information are ZIP-compressed), the spreadsheet data might have a data structure in which several <table:table-row> tags indicating a row exist, while being surrounded by a <table:table> tag indicating the entire spreadsheet, several <table:table-cell> tags indicating a cell also are present in each <table:table-row> tag. In this case, the information such as the above "A" or "1" is not explicitly included in the file.

In order to carry out identification, a file analysis function equivalent to the spreadsheet PG 250 might be configured to include the redactable signature generation PG 251, redaction processing PG 252, and redactable signature verification PG 253, for example. However, this requires development costs, and moreover, if the function of the spreadsheet PG 250 is added, the redactable signature generation PG 251, redaction processing PG 252, and redactable signature verification PG 253 might each have to be changed accompanying the addition, which results in an increase in maintenance costs.

In this embodiment, differentiation is made possible by giving a specific ID to each cell in the spreadsheet PG 250. Assigning such IDs can be realized using a function of the spreadsheet PG 250. The given ID is output into the file when the data is output by the spreadsheet PG 250 as a file.

As a specific example, an attribute value of the above-mentioned <table:table-cell> tag is outputted. The redactable signature generation PG 251 can identify which part is the data corresponding to the cell to be processed by retrieving this ID from the file.

The XML data below is an output file example with spreadsheet data in two rows by three columns. According to this embodiment, an attribute value Region ID as an ID for the redactable signature is given to the XML element corresponding to each cell, that is, the element with the start tag of <table:table-cell>. Therefore, if data at row 1 column B is to be operated on (read, for example) in the course of redactable signature generation or redaction processing, for example, it is only necessary to retrieve a tag with the RegionID of "2".

In the example below, an example where the RegionID is given serially is shown, but an ID different from that may be given in the present invention. For example, an ID of "1A" may be given to a cell at row 1 column A. Alternatively, instead of directly giving an ID to the <table:table-cell> tag, as <table:table-cell Regionld="1">, a style (a style called "cel" in this case) may be assigned to each tag as in "<table:table-cell table:style-name="cel">, a definition of the style may be described at another location in the XML file as <style:style style:name="ce1" style:family="table-cell"> <styleaable-cell-properties Regionld="1" /> </style:style>, and an ID may be given therein. Moreover, information indicating a redaction state (redactable, already redacted, nonredactable) other than the ID, may be included as an attribute value, for example.
<table:table>
<table:table-row>
<table:table-cell Regionld="1">
   Contents of row 1 column A
</table:table-cell>
<table:table-cell Regionld="2">
   Contents of row 1 column B
</table:table-cell>
<tableaable-cell Regionld="3">
   Contents of row 1 column C
</table:table-cell>
</table:table-row>
<table:table-row>
<table:table-cell Regionld="4">
   Contents of row 2 column A
</table:table-cell>
<table:table-cell Regionld="5">
   Contents of row 2 column B
</table:table-cell>
<table:table-cell Regionld="6">
   Contents of row 2 column C
</table:table-cell>
</table:table-row>
</table:table>

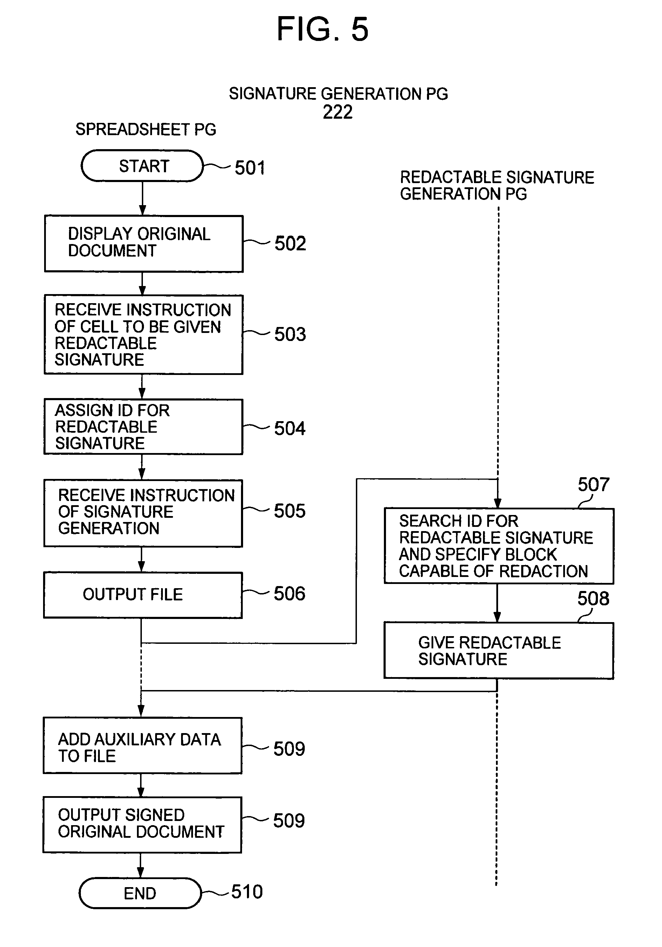

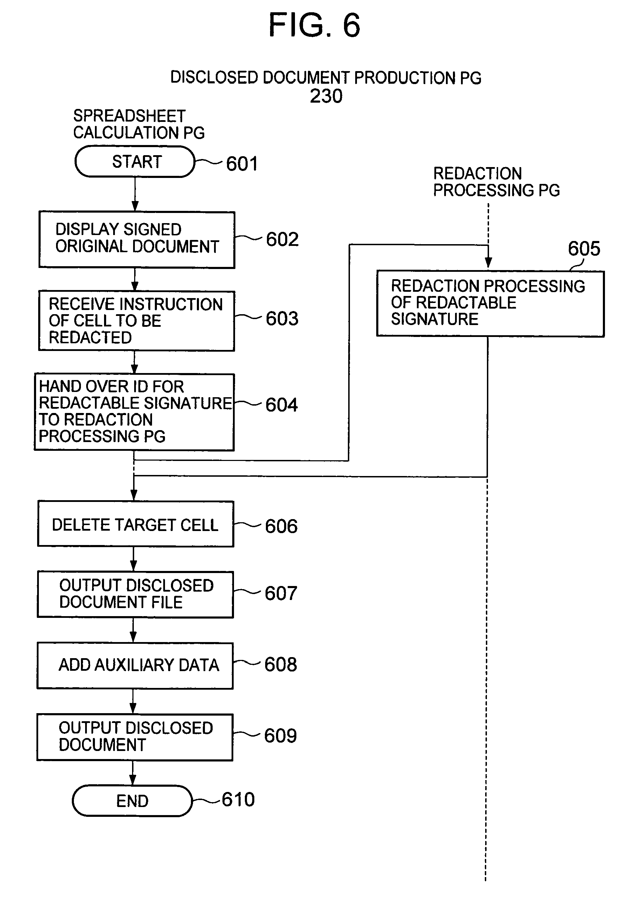

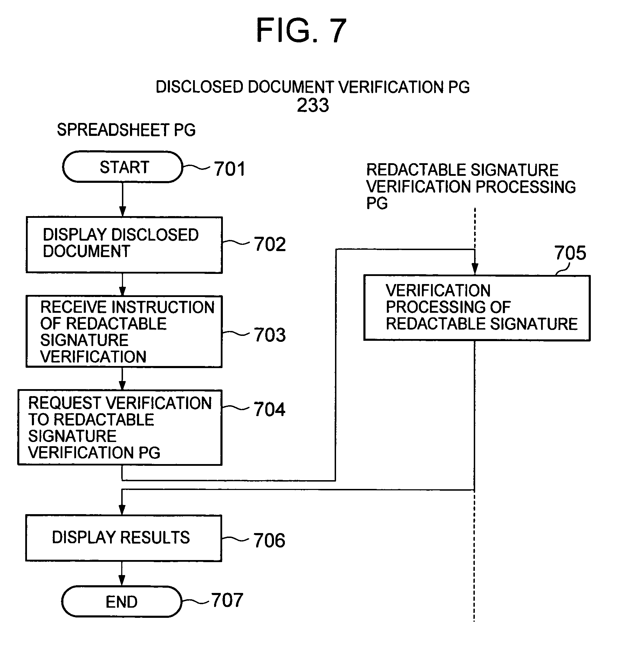

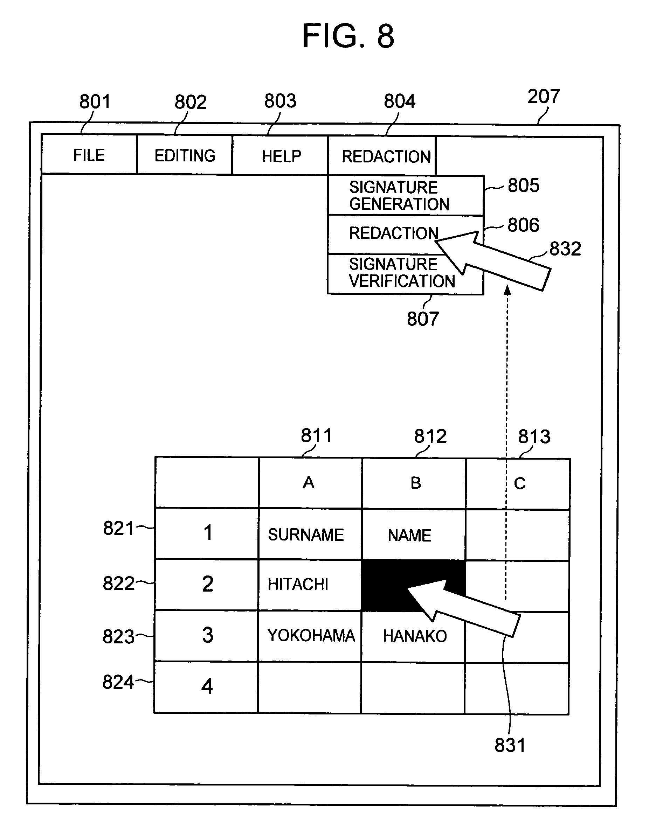

Fig. 5 is a flowchart illustrating the processing outline of the signature generation PG 222.
501: Start.
502: The spreadsheet PG 250 of the signature generation PG 222 displays the original document on the display device 207.
503: The spreadsheet PG 250 receives instructions for one or a plurality of cells to be given redactable signatures from a user through the input device 206.
504: The spreadsheet PG 250 assigns an ID for the redactable signature to the cell for which the instruction was received at Step 503.
504: The spreadsheet PG 250 assigns an ID for the redactable signature to the cell for which the instruction was received at Step 503.
505: The spreadsheet PG 250 receives instructions for redactable signature generation from the user through the input device 206.
506: The spreadsheet PG 250 outputs the original document (the ID for the redactable signature is assigned to the cell to be the target of the redactable signature) to the file.
507: The signature generation PG 251 of the signature generation PG 222 searches the cell to be the target of the redactable signature given the ID for the redactable signature from the original document output as the file and identifies a point to be given the redactable signature. For example, if the ID is output as an attribute value of the <table:table-cell> tag as above, it is only necessary that a portion surrounded by the <table:table-cell> tag including the ID for the redactable signature be made as a single "redactable block " in the redactable signature generation.
508: The signature generation PG 222 gives the redactable signature to each point identified at Step 507 according to the procedure, Outline of the redactable signature method: signature generation processing, as the "block capable of being redacted".
509: The spreadsheet PG 250 adds auxiliary data (e.g.; random numbers or signature values) to be recorded which emerges as the result and course of Step
508 to the file of the original document. Specifically, for example, it may be added as an attribute value of the <table:table-cell> tag similar to the ID, or it may be added to the style assigned to the <table:table-cell> tag. Alternatively, if several files including the XML file corresponding to the spreadsheet data as the OpenDocument format are ZIP-compressed to constitute a single file, for example, auxiliary data may be recorded in the single XML file and this may be added to the ZIP-compressed file.
510: The spreadsheet PG 250 outputs the file obtained at Step 509 as the signed original document. The generated signed original document signature is transmitted to the document managing device 103 by the above-mentioned document storage request PG 223.
511: End

The selection of a cell at Step 503 may be carried out by selecting a single or a plurality of cells on a screen with a mouse cursor using a mouse and then pressing a button for specifying a region for the redactable signature separately displayed on the screen, by selecting a menu to specify the region for the redactable signature separately displayed in the menu bar on the screen, or by selecting a menu for specifying the region for the redactable signature set to be displayed by a right click, for example.

The signature generation instruction at Step 505 may be carried out by pressing a button for instructing the signature generation separately displayed on the screen with a mouse cursor using a mouse, by selecting a menu for instructing the signature generation separately displayed in a menu bar on the screen, or by selecting a menu for instructing the signature generation set to be displayed by a right click, for example.

Fig. 6 is a flowchart illustrating the processing outline of the disclosed document production PG 230 at Step 405 in Fig. 4.
601: Start
602: The spreadsheet PG 250 of the disclosed document production PG 230 displays the signed original document on the display device 207.
603: The spreadsheet PG 250 receives a selection instruction for one or a plurality of cells to be the target of redaction processing from a user through the input device 206. The cell selection can be made similarly to Step 503, for example. At this time, if a cell other than the cell given the ID for the redactable signature is to be specified, it is desirable to notify the user that the cell can not be specified.
604: The spreadsheet PG 250 identifies the instructed cell to be the target of redaction processing. The already given ID for the redactable signature is identified and handed over to the redaction processing PG 252.
605: The redaction processing PG 252 of the disclosed document production PG 230 regards the cell identified by the ID for the redactable signature handed over from the spreadsheet PG 250 at Step 604 as a block to be actually redacted and executes the redaction processing according to the abovementioned procedure: Outline of the redactable signature method: Redaction processing. However, deletion of a block capable of being redacted is executed by the spreadsheet PG 250 at Step 606.
606: The spreadsheet PG 250 deletes the data of the cell indicated by the user at Step 603.
607: The spreadsheet PG 250 outputs the disclosed document from which the cell to be the target of redaction is deleted, to the file.
608: The spreadsheet PG 250 adds the auxiliary data (e.g., hash values) to be recorded, which emerges as a result and in a process of Step 605, to the file of the original document. However, the data (e.g., random numbers) deleted at Step
605 is not recorded.
609: The spreadsheet PG 250 outputs the file obtained at Step 608 as the disclosed document. The disclosed document is transmitted to the receiver device 105 by the disclosed document disclosure PG 231.
610: End

At Step 606, after the data is deleted, the background color of the cell may be set to black, or the data of the cell may be replaced by a character string such as "Redacted" indicating the deletion, for example. Alternately, sound data, image data or other multimedia data or data combining them signifying the deletion may be embedded.

With the configuration as above, there is an advantage in that the cell that has been redaction processed can be easily recognized when the data is displayed. According to this embodiment, since the deletion of the cell at Step 606 is carried out using a function of the spreadsheet PG 250, deletion of the data and a representation such as change of the background color as mentioned above can be realized easily and appropriately.

Unlike the above, when the redaction processing PG 252 is capable of analyzing the file, the cell deletion or background color change at Step 606 may be realized by directly rewriting the file.

Fig. 7 is a flowchart illustrating the processing outline of the disclosed document verification PG 233 in the receiver device 105.
701: Start.
702: The spreadsheet PG 250 of the disclosed document verification PG 233 displays the disclosed document on the display device 207.
703: The spreadsheet PG 250 receives an instruction for redactable signature verification from the user through the input device 206.
704: The spreadsheet PG 250 requests signature verification from the redactable signature verification PG 253.
705: The redactable signature verification PG 253 of the disclosed document verification PG 233 carries out the signature verification processing according to the above Outline of redactable signature method: Signature verification processing, with the file of the disclosed document as input.
706: The spreadsheet PG 250 receives the result of Step 705 and displays the result on the display device 207. A dialog box indicating the result as "verification successful" or "verification failed" may be displayed, for example, or no-alteration may be expressed by changing the color of the cell for which no alteration is confirmed as the result of the signature verification, e.g., darkening/brighten the background color, for example. Alternatively, the display may be such that the signature can be easily distinguished from other regions visually by surrounding it with a bold line.
707: End

Fig. 8 is an outline explanatory diagram of a screen image on the display device 207 in the disclosed document production processing (at redaction processing) in this embodiment described in Fig. 6.

The spreadsheet PG 250 displays 12 cells in total made up of columns A to C (811 to 813) by rows 1 to 4 (821 to 824) on the screen, and a menu of blacking-out (804) characterizing this embodiment is displayed on the display device 207 together with file (801), editing (802), and help (803) menus and the like. The spreadsheet PG 250 further displays signature generation (805), redaction (806) and signature verification (807) as redaction menus.

If a user is to redact column B, row 2 (suppose that the data "Taro" is originally included therein), the user selects column B, row 2 by operating a mouse using a mouse cursor (831) and then moves the mouse cursor (832) and selects the redaction (806) from the menu. As a result, the spreadsheet PG 250 deletes the original data "Taro" in the cell of column B, row 2 as shown in the figure and instead displays it with the background color in black.

As mentioned above, according to this embodiment, differentiation of which part in the files output by the spreadsheet PG 250 is the data to be processed by the redactable signature can be easily realized by a search based on the ID for the redactable signature.

Also, according to this embodiment, a region that may be redacted in the future or a region to be redacted can be specified by the unit of a cell. Also, data display and specification by a user can be easily realized by use of a function provided by the spreadsheet PG 250 using a mouse pointer or a keyboard operation.

In the above embodiment, spreadsheet data is exemplified as an electronic document, but the present invention can be applied to an electronic document other than spreadsheet data, such as figure data and character string data. Specifically, if the electronic document is described in the XML format, for example, similar to giving the ID for the redactable signature to a tag corresponding to the cell in the spreadsheet data in the above XML data example, it is only necessary to give an ID for the redactable signature to the tag corresponding to the data which is a unit of the redaction in the electronic document other than the spreadsheet data, and if the electronic document is not described in the XML format as usual text data, it is only necessary to give a tag to the data which is a unit of the redaction in the electronic document other than the spreadsheet data to be specified as the XML element and to give an ID for the redactable signature.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. An authenticity assurance system for spreadsheet data, comprising a signed spreadsheet data creator device, wherein
the spreadsheet data has at least one cell element data item corresponding to a cell, as component element, and
the signed spreadsheet data creator device comprises:
a spreadsheet unit which manages the spreadsheet data by the cell element data item;
a unit which generates a random number for the at least one cell element data item corresponding to at least one cell that is a target of authenticity assurance, in the cell constituting the spreadsheet data;
a unit which combines the cell element data item with the corresponding generated random number and calculates a hash value for the combined data; and
a redactable signature generating unit which calculates a signature value for at least one hash value combination; and wherein
the spreadsheet unit comprises a unit which generates signed spreadsheet data by giving a redactable signature ID to the cell element data item corresponding to the at least one cell that is the target of authenticity assurance.

2. The authenticity assurance system for spreadsheet data according to claim 1, wherein
in the signed spreadsheet data creator device,
the spreadsheet unit comprises a unit which specifies, as the target for authenticity assurance, a cell for which an instruction is received from a user through an input device.

3. The authenticity assurance system for spreadsheet data according to claim 2, wherein
in the signed spreadsheet data creator device,
the spreadsheet unit comprises a unit which changes background color of the cell that is the target for authenticity assurance, for which the instruction from the user is received.

4. The authenticity assurance system for spreadsheet data according to claim 1, wherein
in the signed spreadsheet data creator device,
the spreadsheet unit comprises a unit which adds the generated signature value and the random number to the signed spreadsheet data.

5. The authenticity assurance system for spreadsheet data according to claim 1, further comprising a disclosed spreadsheet data creator device comprising:
a spreadsheet unit which manages the signed spreadsheet data by the cell element data item; and
a redaction processing unit which deletes the random number corresponding to the cell element data that is the target of the redaction processing, from the signed spreadsheet data; wherein
the spreadsheet unit comprises:
a unit which receives specification of a cell that is the target of the redaction processing, identifying an ID for the redactable signature given to the specified cell, and transmitting the ID to the redaction processing unit; and
a unit which produces a disclosed document in which the cell element data item that is the target of the redaction processing is deleted or replaced by one of a character, symbol, figure and multimedia data, with which deletion is recognizable; and
the redaction processing unit identifies the cell element data that is the target of the redaction processing, based on the ID for the redactable signature.

6. The authenticity assurance system for spreadsheet data according to claim 5, wherein
the spreadsheet unit comprises a unit which specifies the cell specified by the user as the target for the redaction processing, through an input device that the disclosed spreadsheet data creator device comprises.
